## Europäisches Patentamt
## European Patent Office
## Office européen des brevets

(19)

(11) Veröffentlichungsnummer : **0 299 015 B1**

(12) # EUROPÄISCHE PATENTSCHRIFT

(45) Veröffentlichungstag der Patentschrift :
**05.06.91 Patentblatt 91/23**

(51) Int. Cl.$^5$ : **A01K 31/04**

(21) Anmeldenummer : **88900767.0**

(22) Anmeldetag : **14.01.88**

(86) Internationale Anmeldenummer :
**PCT/DE88/00016**

(87) Internationale Veröffentlichungsnummer :
**WO 88/05258 28.07.88 Gazette 88/17**

(54) **KÄFIGANLAGE FÜR GEFLÜGELZUCHTBETRIEBE.**

(30) Priorität : **22.01.87 DE 3701677**
**11.06.87 DE 3719465**

(43) Veröffentlichungstag der Anmeldung :
**18.01.89 Patentblatt 89/03**

(45) Bekanntmachung des Hinweises auf die
Patenterteilung :
**05.06.91 Patentblatt 91/23**

(84) Benannte Vertragsstaaten :
**AT BE CH DE FR GB IT LI NL SE**

(56) Entgegenhaltungen :
**Keine**

(73) Patentinhaber : **Kühlmann, Josef**
**Königstrasse 51**
**W-4419 Laer (DE)**

(72) Erfinder : **Kühlmann, Josef**
**Königstrasse 51**
**W-4419 Laer (DE)**

(74) Vertreter : **Habbel, Hans-Georg, Dipl.-Ing.**
**Postfach 3429 Am Kanonengraben 11**
**W-4400 Münster (DE)**

EP 0 299 015 B1

**Beschreibung**

Die Erfindung bezieht sich auf eine Käfiganlage gemäß dem Oberbegriff des Hauptanspruches.

Derartige Käfiganlagen sind in großem Umfang im Einsatz. Unter jeder der übereinander angeordneten Käfigreihen befindet sich ein umlaufend angetriebenes und geführtes Kotförderband, das auf seinem Arbeitstrum, d.h. dem oberen Trum, den Kot aufnimmt, diesen außerhalb der Käfigreihen abgibt und das dann umgelenkt wird, so daß das Rücklauftrum unterhalb des Arbeitstrumes im Käfig zurückgeführt wird.

Diese bekannte Anordnung hat den Nachteil, daß für die Rückführung des Untertrums innerhalb des Raumes der übereinander angeordneten Käfigreihen Platz erforderlich ist. Die DE-OS 34 46 665 zeigt deutlich, daß hier ein erheblicher Raum notwendig ist, um eine einwandfreie Rückführung des Rücklauftrums zu gewährleisten.

Treten an dem eigentlichen Arbeitstrum Beschädigungen auf, fällt Kot durch die Tragrollen auf die Oberseite des Rücklauftrums und es kann dann zu Stauungen an den Umlenkrollen führen. Diese Stauungen an den Umlenkrollen führen dazu, daß die Umlenkrollen am Umfang zunehmen, und zwar nicht genau über die ganze Länge der Umlenkrolle gesehen, so daß die Laufgenauigkeit des Bandes erheblich beeinträchtigt wird. Läuft das Band aber innerhalb seiner Führung nicht genau, treten weitere Beschädigungen des Bandes und der Bandführungen auf, so daß sich dieser Fehler addiert.

Das Rücklauftrum läuft mit seiner "Kotseite" nach unten gerichtet durch die Käfigreihen und wenn der Abkratzer hier nicht einwandfrei gearbeitet hat, können an dem Rücklauftrum anhaftende Kotteile auf die in der Käfigreihe darunter befindlichen Tiere fallen.

Da die in den einzelnen Käfigreihen angeordneten Tränknippel niemals hundertprozentig dicht sind, ist es bei den bekannten Anlagen nicht auszuschalten, daß sich zwischen dem Arbeitstrum und dem Rücklauftrum Wasser sammelt, das sich wiederum an den Umlenk- und Arbeitsrollen staut. Auch dies führt zu einer schlechten Antriebsleistung und zu weiteren Verschmutzungen des Bandes durch anbackenden Staub u. dgl.

Der Erfindung liegt die Aufgabe zugrunde, die Rückführung des Rücklauftrums so zu gestalten, daß bei gleicher Bauhöhe der Gesamtkäfiganlage der Raum innerhalb der einzelnen Käfige höher wird, also den Tieren mehr Freiraum nach oben zur Verfügung steht, und daß der Antrieb der Kotförderbänder problemloser gestaltet werden kann.

Diese der Erfindung zugrundeliegende Aufgabe wird durch die Lehre des Hauptanspruches gelöst.

Eine vorteilhafte Ausgestaltung ist im Unteranspruch 2 erläutert.

Mit anderen Worten ausgedrückt, wird gemäß der Erfindung vorgeschlagen, daß die Rückführung jedes Rücklauftrumes der übereinander angeordneten Kotförderbänder nicht innerhalb der Käfigreihen erfolgt, sondern daß entweder ober- oder unterhalb der Käfigreihen die Rücklauftrume zusammengefaßt werden und dann wieder an der Einlaufseite der Käfiganlage eingeführt werden. Die Kotförderbänder umschließen also die gesamte Käfiganordnung.

Hierdurch wird erreicht, daß innerhalb jedes einzelnen Käfigs der Raum den Tieren zur Verfügung gestellt werden kann, der bisher für die Rückführung des Rücklauftrumes benötigt wurde, so daß die nach den EG-Vorschriften geforderte höhere Kopffreiheit innerhalb der Käfige gewährleistet wird, ohne daß die Gesamtanlage höher baut.

Bei Beschädigungen des eigentlichen Kotförderbandes fällt nunmehr der Kot nicht auf das Rücklauftrum, sondern auf das darunter befindliche Kotförderband, so daß es nicht mehr zu Stauungen im Bereich der Umlenk- und Antriebsrollen führen kann. Auf die Bänder tropfendes Wasser von den Tränkeinrichtungen kann durch die im Stall befindliche Trocknungsluft abgetrocknet werden, da nunmehr die Trocknungsluft durch den großen Raum der Käfige streichen kann und nicht wie bisher das Wasser sich in dem relativ kleinen Raum zwischen Arbeitstrum und Rücklauftrum sammeln kann.

In der US-PS 33 85 266 ist eine Käfiganlage für Geflügelzuchtbetriebe beschrieben, bei welcher unterhalb der Käfigreihe ein Kotförderband angeordnet ist. Weiterhin ist unterhalb des Kotförderbandes ein Kanal vorgesehen, der zur Führung von Trocknungsluft dient, wobei die Trocknungsluft über ein Sauggebläse aus dem Stallinneren angesaugt und über den Kot geführt wird.

Die bekannte Einrichtung arbeitet derart, daß das Kotförderband unterhalb der Käfiganlagen aus einem endlosen Band besteht. Das vorzugsweise aus Kraftpapier bestehende Band wird von einer Vorratsrolle abgerollt und über eine Umlenkrolle in eine Sammelvorrichtung abgegeben. Das Band wird zusammen mit dem darauf sich befindenden, getrockneten Kot verpackt und für die Verschiffung bereitgestellt.

Dieser bekannten Anordnung gegenüber liegt der Erfindung weiterhin die Aufgabe zugrunde, ein Verfahren zum Trocknen und Abfördern von Kot zu schaffen, das mit möglichst geringen Installationsleistungen auskommt, wobei insbesondere die gesamte Käfiganlage möglichst niedrig und der Wartungsaufwand möglichst gering sein soll.

Diese der Erfindung zugrundeliegende Aufgabe wird durch die Lehre des Anspruches 3 gelöst.

Mit anderen Worten ausgedrückt, wird im Gegensatz zur gattungsbildenden Anordnung für jede Käfigreihe ein endlos umlaufendes Förderband vorgeschlagen, das anschließend nach Durchlaufen der Käfigreihe durch einen Trocknungskanal geführt wird, aber so, daß der Kot auf diesem Förderband an der Unterseite haftet und insbesondere durch Umlenkrollen an diese Unterseite aufgepreßt ist. Die im Kanal geführte Trocknungsluft, die nunmehr, im Gegensatz zur gattungsbildenden Einrichtung, unmittelbar im Kanal mit dem Kot beladenen Förderband in Kontakt kommt, bewirkt, daß der Kot hier abtrocknet, da er in einer sehr dünnen Schicht auf dem Kotförderband angeordnet ist und dieses nunmehr innerhalb des Kanals vom Kotförderband abfallende Kotpartikelchen wird auf einer innerhalb des Kanals angeordneten Kotfördervorrichtung aufgefangen und abgeführt.

Ausführungsbeispiele der Erfindung werden nachfolgend anhand der Zeichnungen erläutert.

In den Zeichnungen zeigen

Fig. 1 einen Schnitt durch eine Käfiganlage mit den übereinander angeordneten Käfigen,

Fig. 2 schematisch die Führung der Bänder,

Fig. 3 schaubildlich und doch schematisch die Anordnung der erfindungsgemäßen Kotsammel- und Trocknungsvorrichtung mit einem oberhalb der Käfigetagen angeordneten Trocknungskanal und

Fig. 4 eine Anordnung, bei welcher der Trocknungskanal unterhalb der Käfigetagen angeordnet ist.

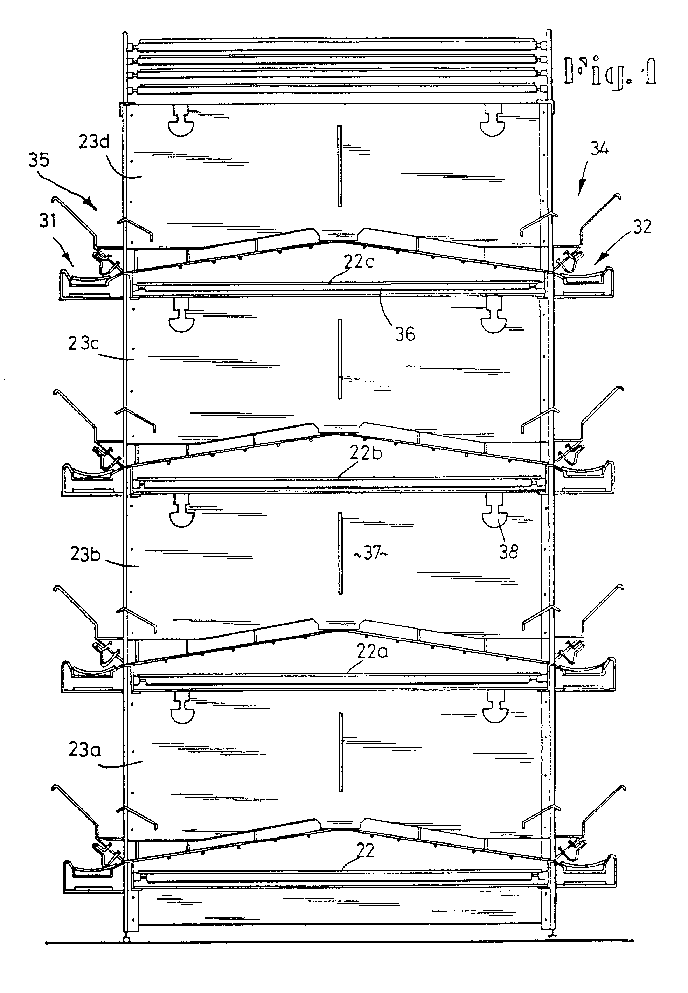

In Fig. 1 sind mit 23a-23d vier übereinander angeordnete Käfige bezeichnet, die doppelt ausgebildet sind, wobei jeder Käfigetage Eiersammelbänder 31 und 32 zugeordnet sind. Bei 34 und 35 sind die erforderlichen Futtertröge dargestellt. Unterhalb jedes Käfigs ist je ein Kotförderband 22, 22a, 22b, 22c angeordnet, die über Führungsrollen 36 geführt sind. In den die einzelnen Käfige abtrennenden Trennwänden 37 sind die für die Tränknippel erforderlichen Öffnungen 38 erkennbar.

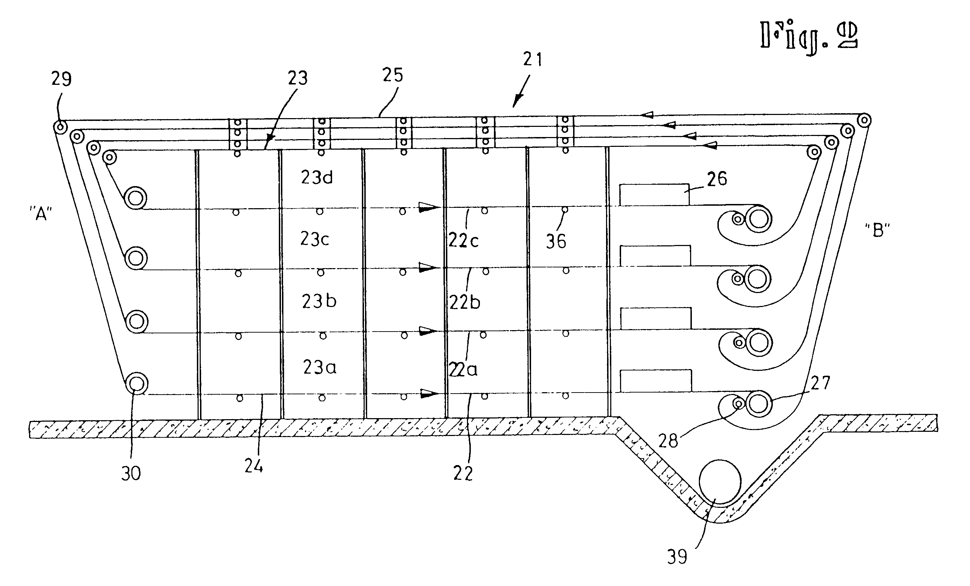

Aus Fig. 2 ist die Gesamtkäfiganlage 21 erkennbar und weiterhin ist erkennbar, daß die Kotförderbänder 22, 22a, 22b, 22c je ein Arbeitstrum 24 und ein Rücklauftrum 25 aufweisen. Die Kotförderbänder 22, 22a, 22b, 22c werden unterhalb der in horizontaler Richtung nebeneinander angeordneten Käfige 23a - 23d geführt. Außerhalb der Käfigreihen 23 sind Abstreifeinrichtungen 26 für den auf der Oberseite des Arbeitstrumes 24 befindlichen Kot angeordnet und anschließend wird jedes Arbeitstrum 24 um eine Zugwalze 27 geführt, die mit einer Andrückwalze 28 zusammenarbeitet und dann wird an einer Auslaufseite B der Käfiganlage jedes Band bei dem in Fig. 2 dargestellten Ausführungsbeispiel nach oben umgelenkt und gelangt als Rücklauftrum 27 zu einer Einlaufseite A der Käfiganlage zurück. Die entsprechend erforderlichen Umlenkrollen und Führungsrollen sind in Fig. 2 erkennbar.

Im Bereich der Einlaufseite A sind die Umlenkrollen 29 und 30 dargestellt, die die Bänder wieder genau in die horizontale Ebene der einzelnen Käfigreihen 23 führen.

Unterhalb der Kotabstreifeinrichtungen 26 ist eine Förderschnecke 39 dargestellt, die der Abförderung des von den Arbeitstrumen 24 abgestreiften Kotes dient.

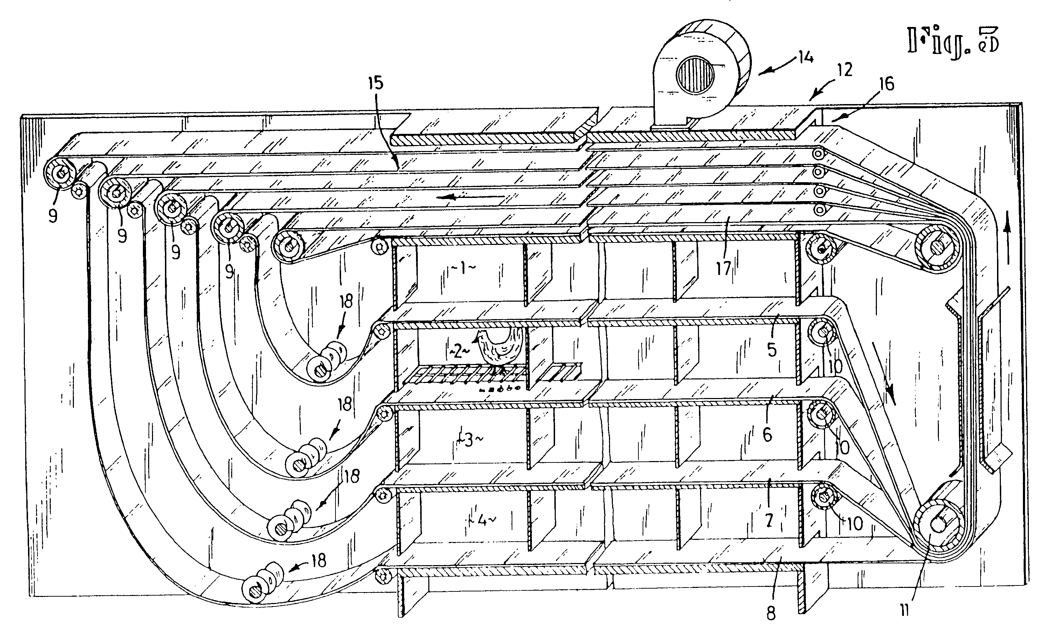

In Fig. 3 sind mit 1, 2, 3 und 4 vier übereinander angeordnete Käfigreihen bezeichnet, die an sich bekannter Ausbildung sind, so daß sie hier nicht weiter erläutert werden müssen. Unterhalb jeder Käfigreihe ist ein Kotförderband 5, 6, 7 und 8 angeordnet. Aus dem entsprechend gitterartig ausgebildeten Boden jeder Käfigreihe gelangt der Kot auf die Oberseite jedes Kotförderbandes. Die Kotförderbänder werden durch einen in der Zeichnung nicht besonders dargestellten Antrieb angetrieben, beispielsweise über die jeweiligen Umlenkrollen 9, wobei der Antrieb vorzugsweise langsam und intermittierend in Abhängigkeit der anfallenden Kotmenge erfolgt. Das mit Kot beladene Trum jedes Kotförderbandes 5 bis 8 wird dann ai Ende jeder Käfigreihe über entsprechende Umlenkrollen 10 zu einer Preßwalze 11 geführt und hier wird die sich auf der Oberseite des Kotförderbandes befindende Kotschicht auf das Band aufgepreßt. Durch die Zusammenführung der verschiedenen Kotförderbänder 5, 6, 7 und 8 erfolgt ein dichtes Aufpressen der jeweils auf den Bändern befindlichen Kotschicht. Anschließend werden diese Bänder in vertikaler Richtung nach oben gefördert und dann zurück durch einen Trocknungskanal 12 geführt. Im Trocknungskanal selbst werden die Bänder wieder im Abstand geführt, indem entsprechende Führungsrollen oder sonstige Einrichtungen vorgesehen sind. Der Kanal 12 ist mit einem Gebläse 14 ausgerüstet, das bei dem dargestellten Ausführungsbeispiel etwa mittig über die Längsachse jeder Käfigreihe gesehen am Kanal angeordnet ist und als Sauggebläse ausgebildet ist. Hierdurch wird – da die Kanalstirnseiten offen sind – durch diese offenen Stirnseiten, die dadurch als Luftansaugöffnungen 15 und 16 wirken, aus dem eigentlichen Stallgebäude relativ warme Stalluft durch den Kanal angesaugt und durch das Gebläse 14 abgeführt. Hierbei bestreicht die angesaugte Luft die Kotschicht auf jedem Kotförderband. Da die Kotförderbänder entsprechend langsam umlaufen, der Kanal entsprechend lang ausgebildet ist, erfolgt eine vollkommene Trocknung des auf den Kotförderbändern befindlichen Kotes. Unterhalb der durch den Kanal 12 geführten Trume der Kotförderbänder ist eine Kotfördervorrichtung 17 vorgesehen, die parallel zu der Förderrichtung der Kotförderbänder ausgerichtet ist und deren Obertrum innerhalb des Kanals liegt, während das rücklaufende Untertrum außerhalb des Kanales verlegt werden kann. Der von dem Kotförderband 5 abfallende Kot gelangt auf die Kotfördervorrichtung 17 und wird durch diese am Ende abgegeben und gelangt dabei in eine in dem rücklaufenden Trum des Kotförderbandes 5 gebildete Mulde. In dieser Mulde kann eine Förderspirale 18 für den trockenen Kot vorgesehen werden.

Der vom Kotförderband 6 abfallende Kot gelangt in die Rücklaufmulde des Kotförderbandes 7 und wird hier ebenfalls durch eine Förderspirale 18 abgefördert. Hierbei hat sich herausgestellt, daß es nicht zwingend erforderlich ist, derartige Förderspiralen vorzusehen, sondern allein durch eine geringfügige Schrägneigung der Förderbänder in dem Muldenbereich oder einen Abstreifer erfolgt ein automatisches Austragen des Kotes auf eine in der Zeichnung nicht dargestellte endgültige Abfördereinrichtung.

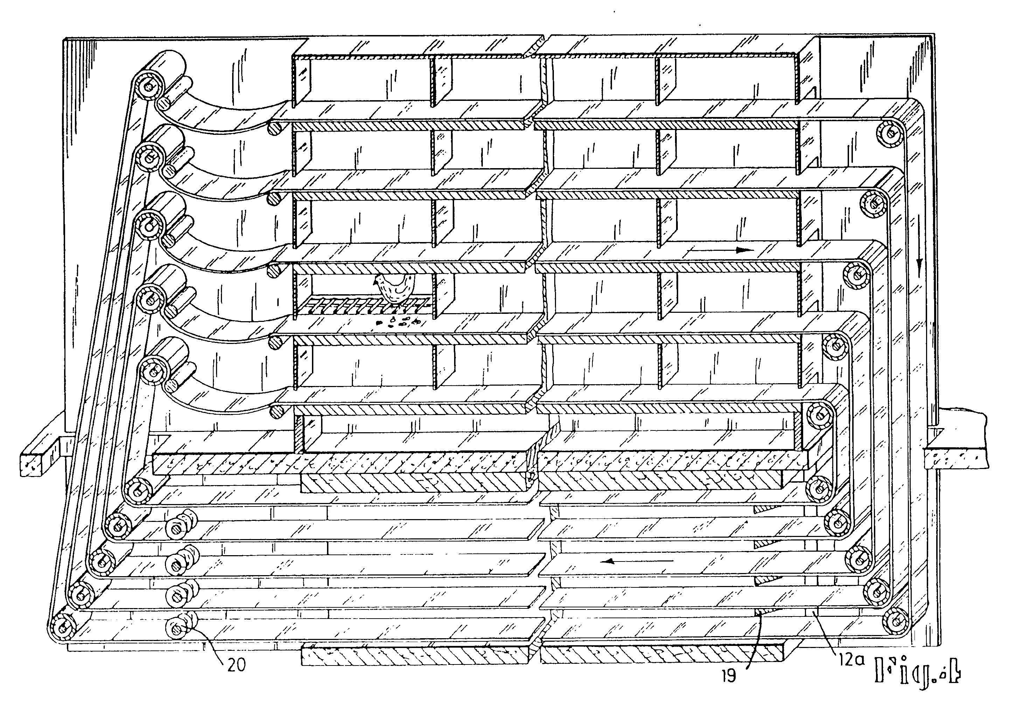

Bei der in Fig. 4 dargestellten Ausführungsform, die im Prinzip in gleicher Weise ausgebildet ist, ist ein Kanal 12a unterhalb der Käfigreihen vorgesehen und die einzelnen Kotförderbänder werden aus der Käfiganlage heraus vertikal nach unten umgelenkt und gelangen dann in den Kanal 12a, der ebenfalls mit einer entsprechenden Gebläseeinrichtung ausgerüstet ist, die für ein Zuführen trockener, warmer Luft bestimmt ist.

In dem in Fig. 4 dargestellten Ausführungsbeispiel ist es möglich, zusätzlich an der Unterseite der Bänder wirkende Abkratzer 19 vorzusehen und bei dem in Fig. 4 dargestellten Ausführungsbeispiel sind die Förderspiralen für den Kot mit 20 bezeichnet.

## Ansprüche

1. Käfiganlage für Geflügelzuchtbetriebe mit mehreren in vertikaler Richtung übereinander angeordneten Käfigreihen und je einem unterhalb jeder Käfigreihe angeordneten, umlaufend angetriebenen Kotförderband sowie einer Abstreifeinrichtung für den auf der Oberseite jedes Kotförderbandes befindlichen Kot, dadurch gekennzeichnet, daß die Rücklauftrume (25) aller Kotförderbänder (22, 22a, 22b, 22c) anschließend an die Abstreifeinrichtungen (26) ober- oder unterhalb der übereinander angeordneten Käfigreihen (23) gemeinsam zurückgeführt werden.

2. Käfiganlage nach Anspruch 1, dadurch gekennzeichnet, daß anschließend an die Abstreifeinrichtung (26) für jedes Kotförderband (22) eine Zugwalze (27) mit einer Andruckwalze (28) vorgesehen ist und die Umlenkung der Kotförderbänder (22, 22a, 22b, 2c) im Bereich der Einlaufseite über einfache Umlenkrollen (29, 30) erfolgt.

3. Käfiganlage nach Anspruch 1 oder 2 mit einem Sauggebläse zur Förderung von Trocknungsluft aus dem Raum der Käfiganlage über den Kot, dadurch gekennzeichnet, daß

a) das Kotförderband (5, 6, 7, 8) als umlaufendes Förderband ausgebildet ist,

b) das Kotförderband (5, 6, 7, 8) umgelenkt durch einen Kanal (12, 12a) geführt wird, wobei die Kotseite des Bandes innerhalb des Kanales (12, 12a) nach unten gerichtet ist,

c) der Kanal (12, 12a) wenigstens an seinen beiden Stirnseiten mit zum Stallinneren hingerichteten Luftansaugöffnungen (15, 16) ausgerüstet ist und das Gebläse (14) an dem Kanal (12, 12a) anschließt,

d) im Kanal (12, 12a) unterhalb des den Kot fördernden Trumes eine Kotfördervorrichtung (17, 20) vorgesehen ist, die den vom Kotfördertrum abfallenden Trockenkot aus dem Kanal ausfördert.

4. Käfiganlage nach Anspruch 3, dadurch gekennzeichnet, daß

a) der Kanal (12) oberhalb der Käfigreihe (1, 2, 3, 4) angeordnet ist,

b) die Kotschicht des mit Kot beladenen Trums des Kotförderbandes über eine schneller als das Band umlaufende Preßwalze (11) auf das Band aufgepreßt wird und das Band in vertikaler Richtung nach oben umgelenkt wird und

c) die Preßwalze (11) gleichzeitig als Umlenkwalze für das Kotförderband ausgebildet ist.

5. Käfiganlage nach einem oder mehreren der vorhergehenden Ansprüche, dadurch gekennzeichnet, daß die Preßwalze (11) einen relativ großen Durchmesser aufweist.

6. Käfiganlage wenigstens nach Anspruch 3, dadurch gekennzeichnet, daß die Kotfördervorrichtung (17) innerhalb des Kanales (12) durch ein umlaufendes Förderband gebildet wird, von welchem lediglich das Obertrum durch den Kanal geführt ist, während das Untertrum unterhalb des Kanales zurückgeführt wird.

7. Käfiganlage nach Anspruch 3, dadurch gekennzeichnet, daß der Kanal unterhalb der Käfigreihe angeordnet ist und das mit Kot beladene Trum über Umlenkrollen nach unten in den Kanal geführt wird.

8. Käfiganlage nach einem oder mehreren der vorhergehenden Ansprüche, dadurch gekennzeichnet, daß mehrere Käfigreihen in vertikaler Richtung übereinander angeordnet sind und alle Kotfördertrume in vertikaler Richtung umgelenkt und durch den Kanal (12, 12a) geführt sind.

9. Käfiganlage nach einem oder mehreren der vorhergehenden Ansprüche, dadurch gekennzeichnet, daß der Antrieb des oder der Kotförderbänder (5, 6, 7, 8) intermittierend erfolgt.

10. Käfiganlage nach Anspruch 3 und 9, dadurch gekennzeichnet, daß innerhalb des Kanals (12a) an jeder Unterseite des Kotbandes eine Förderspirale (20) für trockenen Kot am Ende des Kanals angeordnet ist.

11. Käfiganlage nach einem der Ansprüche 1 bis 10, dadurch gekennzeichnet, daß innerhalb des Kanals (12a) an der Kotseite jedes Kotförderbandes ein Abkratzer (19) vorgesehen ist.

## Claims

1. A cage installation for poultry breeding operations comprising several rows of cages arranged above each in the vertical direction and an excrement conveyor belt driven revolvingly and arranged underneath each row of cages as well as a stripping device for the excrement located on the top of each excrement conveyor belt, characterized in that the return strands (25) of all the excrement conveyor belts (22, 22a, 22b, 22c) travel back together subsequent to the stripping devices (26) above or below the superposed rows of cages (23).

2. A cage installation according to claim 1, characterized in that a drawing roller (27) with a feed roll (28) is provided subsequent to the stripping device (26) for each excrement conveyor belt (22) and turning of the excrement conveyor belts (22, 22a, 22b, 22c) is effected in the region of the feed side by means of simple deflecting rollers (29, 30).

3. A cage installation according to claim 1 or claim 2 comprising an extractor fan for conveying drying air out of the cage installation room over the excrement, characterized in that

    a) the excrement conveyor belt (5, 6, 7, 8) is constructed as a revolving conveyor belt,

    b) the excrement conveyor belt (5, 6, 7, 8) is guided deflectedly through a channel (12, 12a), the excrement side of the belt being directed downwards inside the channel (12, 12a)

    c) the channel (12, 12a) is provided on at least its two ends with air intake openings (15, 16) directed towards the inside of the house and the fan (14) adjoins the channel (12, 12a),

    d) an excrement conveyor device (17, 20) is provided in the channel (12, 12a) underneath the excrement-conveying strand, which excrement conveyor device (17, 20) conveys out of the channel the dry excrement falling from the excrement conveyor strand.

4. A cage installation according to claim 3, characterized in that

    a) the channel (12) is arranged above the row of cages (1, 2, 3, 4),

    b) the layer of excrement on the strand of the excrement conveyor belt loaded therewith is pressed onto the belt by a press roll (11) revolving more quickly than the belt and the belt is deflected upwards in the vertical direction and

    c) the press roll (11) is constructed at the same time as a deflecting roller for the excrement conveyor belt.

5. A cage installation according to one or more of the preceding claims, characterized in that the press roll (11) has a relatively large diameter.

6. A cage installation at least according to claim 3, characterized in that the excrement conveyor device (17) is formed inside the channel (12) by a revolving conveyor belt, of which only the upper strand is guided through the channel while the lower strand is carried back below the channel.

7. A cage installation according to claim 3, characterized in that the channel is arranged underneath the row of cages and the strand loaded with excrement is guided downwards into the channel via deflecting rollers.

8. A cage installation according to one or more of the preceding claims, characterized in that several rows of cages are arranged above each other in a vertical direction and all the excrement conveyor strands are vertically deflected and guided through the channel (12, 12a).

9. A cage installation according to one or more of the preceding claims, characterized in that driving of the excrement conveyor belt(s) (5, 6, 7, 8) is effected intermittently.

10. A cage installation according to claim 3 and claim 9, characterized in that a conveyor helix (20) for dry excrement is arranged inside the channel (12a) at the end thereof on the bottom of each excrement belt.

11. A cage installation according to any one of claims 1 to 10, characterized in that a scraper (19) is provided inside the channel (12a) on the excrement side of each excrement conveyor belt.

## Revendications

1. Cages pour élevages de volaille avec plusieurs rangées de cages disposées les unes au-dessus des autres dans le sens vertical et une bande de transport des fientes disposée en-dessous de chaque rangée de cages, entraînée en révolution ainsi qu'un dispositif de raclage pour la fiente se trouvant sur la face supérieure de chaque bande de transport des fientes, caractérisées en ce que les brins de retour (25) de toutes les bandes de transport des fientes (22, 22a, 22b, 22c) sont renvoyées ensemble après les dispositifs de raclage (26) au-dessus ou en-dessous des rangées de cages (23) disposées les unes au-dessus des autres.

2. Cages selon la revendication 1, caractérisées en ce qu'après le dispositif de raclage (26) pour chaque bande de transport des fientes (22) un rouleau tireur (27) avec un rouleau presseur (28) est prévu et en ce que le renvoi des bandes de transport des fientes (22, 22a, 22b, 22c) se fait dans la zone du côté d'entrée par des rouleaux de renvoi (29, 30) simples.

3. Cages selon la revendication 1 ou 2 avec un ventilateur extracteur pour le transport d'air de séchage depuis la salle des cages par-dessus la fiente, caractérisées en ce que :

    a) la bande de transport des fientes (5, 6, 7, 8) est conçue comme une bande de transport circulante,

    b) la bande de transport des fientes (5, 6, 7, 8) est déviée dans un canal (12, 12a), la face couverte de fientes de la bande étant alors dirigée vers le bas à l'intérieur du canal (12, 12a),

c) le canal (12, 12a) est équipé au moins à ses deux faces de bout d'ouvertures d'aspiration d'air (15, 16) dirigées vers l'intérieur du poulailler et la soufflerie (14) est raccordée au canal (12, 12a),

d) dans le canal (12, 12a) au-dessous du brin transportant la fiente, un dispositif de transport des fientes (17, 20) est prévu, qui évacue du canal la fiente sèche tombant du brin de transport.

4. Cages selon la revendication 3, caractérisée en ce que :

a) le canal (12) est disposé au-dessus de la rangée de cages (1, 2, 3, 4),

b) la couche de fiente du brin chargé de fiente de la bande de transport des fientes est pressée sur la bande par un rouleau presseur (11) tournant plus vite que la bande et la bande est déviée dans le sens vertical vers le haut et

c) le rouleau presseur (11) est congru en même temps comme rouleau de renvoi pour la bande de transport des fientes.

5. Cages selon une ou plusieurs revendications ci-dessus, caractérisée en ce que le rouleau presseur (11) présente un diamètre relativement grand.

6. Cages selon au moins la revendication 3, caractérisée en ce que le dispositif de transport des fientes (17) est formé à l'intérieur du canal (12) par une bande de transport circulante, dont seul le brin supérieur est guidé à travers le canal, pendant que le brin inférieur est renvoyé en-dessous du canal.

7. Cages selon la revendication 3, caractérisées en ce que le canal est disposé en-dessous de la rangée de cages et que le brin chargé de fientes est guidé vers le bas dans le canal par des rouleaux de renvoi.

8. Cages selon une ou plusieurs des revendications ci-dessus, caractérisées en ce que plusieurs rangées de cages sont disposées les unis au-dessus des autres dans le sens vertical et que tous les brins de transport des fientes sont déviés dans le sens vertical et guidés à travers le canal (12, 12a).

9. Cages selon une ou plusieurs des revendications ci-dessus, caractérisées en ce que l'entraînement de la ou des bande(s) de transport des fientes (5, 6, 7, 8) se fait par intermittence.

10. Cages selon l'une des revendications 3 et 9, caractérisées en ce qu'à l'intérieur du canal (12a) sur chaque face inférieure de bande de transport des fientes une hélice transporteuse (20) pour la fiente sèche est disposée à l'extrémité du canal.

11. Cages selon l'une des revendications 1 à 10, caractérisées en ce qu'à l'intérieur du canal (12a) sur le côté chargé de fiente de chaque bande de transport des fientes un racloir (19) est prévu.

Fig. 1

Fig. 2

EP 0 299 015 B1

Fig. 2b